# DEMANDE DE BREVET EUROPEEN

(11) **EP 2 281 724 A1**
(43) Date de publication de la demande: **09.02.2011**
(21) Numéro de dépôt: 10169854.6
(22) Date de dépôt: 16.07.2010
(51) Int. Cl.: B60T 7/06, B60T 11/18

(54) **Commande de freinage comprenant une pédale de frein pivotante**

(30) Priorité: 03.08.2009 FR 0955445
(71) Demandeur: Peugeot Citroën Automobiles SA, 78140 Vélizy-Villacoublay (FR)
(72) Inventeur: Martel, Philippe, 78117, Toussus-le-Noble (FR)

(57) **Abrégé**

Commande de freinage comprenant une pédale de frein (32, 72) pivotante autour d'un point d'articulation de pédale (8), et un maître-cylindre de freinage (20) comportant des pistons (24) coulissants suivant un axe (28), actionnés par une tige de liaison (14) reliée d'un côté par un pivot (16) à l'axe des pistons, et de l'autre côté en un point de commande (12) à un bras pivotant autour d'un point d'articulation (8, 64), ce bras faisant partie de la pédale de frein (32), ou d'un levier (62) reproduisant le débattement de la pédale avec un mouvement angulaire similaire, **caractérisée en ce que** la pédale de frein (32, 72) étant au repos, l'angle α formé par la droite passant par les points d'articulation (8, 64) et de commande (12), et l'axe (28) du maître-cylindre (20), est supérieur à 100°.

## Description

La présente invention concerne une commande de freinage pour véhicule automobile, comportant une pédale de frein, ainsi qu'un véhicule automobile équipé d'une telle commande.

Les véhicules automobiles comportent généralement une commande de freinage comprenant une pédale de frein agissant sur un maître-cylindre, pour transmettre par des circuits hydrauliques une pression du fluide vers des récepteurs freinant les différentes roues du véhicule.

La pédale de frein agit par une tige de commande sur un piston coulissant axialement dans le maître cylindre, qui sépare un volume avant comprenant une chambre mise en pression, d'un volume arrière relié à un réservoir contenant un liquide à la pression atmosphérique.

La commande de freinage peut comprendre un amplificateur de freinage à dépression qui ajoute une force de freinage sur le maître-cylindre, venant en complément de celle appliquée par le conducteur, ou des dispositifs d'aide à la conduite, comme un système de modulation de la pression de freinage appelé ABS (Anti-lock Braking System).

La pression hydraulique de freinage est transmise aux récepteurs comportant des garnitures de freinage, qui sont pressées sur des disques ou des tambours liés en rotation aux roues, pour délivrer un couple de freinage.

Dans le cas du frein à disque, deux plaquettes de freinage comportant des garnitures, sont serrées en opposition sur les deux faces du disque par un piston d'un vérin hydraulique contenu dans un boîtier de frein. Le boîtier comporte dans une gorge un joint annulaire élastique en appui sur le piston, pour assurer une étanchéité dynamique lors du coulissement de ce piston.

Pour des petits mouvements du piston, le joint annulaire subit une déformation élastique entre sa face extérieure maintenue dans la gorge, et sa face intérieure qui reste sensiblement collée sur le piston. Cette déformation élastique applique un effort de rappel qui tend à faire reculer le piston, en retournant le liquide de freinage vers l'émetteur quand la pression hydraulique chute, pour écarter les garnitures du disque et libérer la rotation des roues. Le recul du piston est généralement de l'ordre de 0,3 mm.

Une bonne libération des disques de frein est importante pour limiter l'usure de ces freins, et pour baisser la consommation des véhicules en réduisant les pertes dues aux freinages parasites.

Il a été calculé que pour un véhicule comprenant quatre freins à disque, un couple résiduel de 10mN sur chaque frein considéré généralement comme une valeur maximum admissible, correspond à une émission supplémentaire de 20 gr de dioxyde de carbone par km.

Pour différentes raisons qui peuvent être un léger voile des disques de frein, des déformations dues aux échauffements lors des freinages, ou des déflections dans les virages, on peut obtenir un couple résiduel supérieur à cette valeur maximum admissible. On cherche alors pour réduire nettement les pertes, à augmenter la valeur du recul du piston en le portant à une valeur de l'ordre de 0,5 mm.

La course morte de la pédale de frein nécessaire pour avancer les garnitures et les plaquer sur les faces du disque, est alors augmentée d'une valeur liée à ce jeu, pour déplacer un volume de liquide correspondant à ce volume additionnel, ce qui modifie la sensation à la pédale et peut perturber le conducteur.

Pour résoudre ce problème, une solution connue utilise le système de modulation de la pression de freinage ABS, pour dans certaines conditions de conduite préparer un freinage en réalisant une avance préliminaire des pistons de frein, ce qui élimine le jeu des garnitures. Un inconvénient de cette solution est qu'elle est onéreuse.

Par ailleurs, le rapport d'assistance de la pédale de frein représentant le rapport entre la course du patin de pédale recevant la pression du conducteur, et la course des pistons du maître-cylindre, est prévu habituellement pour rester sensiblement constant.

Pour cela on dispose une tige de liaison qui relie en un point de commande, la pédale de frein pivotante autour d'un point d'articulation, et les pistons du maître-cylindre, de manière à ce qu'en milieu de course de cette pédale, l'angle formé par la droite passant par les points d'articulation et de commande, et l'axe du maître-cylindre, soit d'environ 90°.

Pour augmenter la course des pistons du maître-cylindre, une solution connue présentée notamment dans le document EP-B1-1349755, comprend une pédale de frein agissant sur la tige de liaison d'un maître-cylindre, par un mécanisme comportant plusieurs billettes pour réaliser une cinématique donnant un rapport d'assistance variable entre la course du patin de pédale, et la course des pistons du maître-cylindre.

Ce mécanisme à rapport variable permet d'obtenir en début de course un rapport d'assistance plus faible pour avancer plus rapidement les pistons, et en fin de course un rapport plus élevé pour délivrer une pression de freinage plus forte. De cette manière on peut profiter de l'avance plus rapide pour augmenter la course des pistons du maître-cylindre, et rattraper un jeu plus important des garnitures de freinage.

Un problème qui se pose est que ce mécanisme avec ses biellettes est plus compliqué à réaliser, et plus onéreux. De plus son encombrement est supérieur, il n'est pas toujours possible d'implanter un tel dispositif dans un habitacle existant.

La présente invention a notamment pour but d'éviter ces inconvénients de la technique antérieure, et d'apporter au problème d'augmentation de la course des pistons du maître-cylindre, une solution simple, compacte et économique.

Elle propose à cet effet une commande de freinage comprenant une pédale de frein pivotante autour d'un point d'articulation de pédale, et un maître-cylindre de freinage comportant des pistons coulissants suivant un axe, actionnés par une tige de liaison reliée d'un côté par un pivot à l'axe des pistons, et de l'autre côté en un point de commande à un bras pivotant autour d'un point d'articulation, ce bras faisant partie de la pédale de frein, ou d'un levier reproduisant le débattement de la pédale avec un mouvement angulaire similaire, caractérisée en ce que la pédale de frein étant au repos, l'angle α formé par la droite passant par les points d'articulation et de commande, et l'axe du maître-cylindre, est supérieur à 100°.

Un avantage de la commande selon l'invention est que par rapport aux solutions connues où l'angle α au repos est inférieur à 90°, pour osciller autour de 90° avec un rapport d'assistance de la pédale sensiblement constant, on obtient de manière simple un rapport d'assistance qui va continument croître, ce qui permet de commencer la course avec un rapport nettement plus bas permettant d'augmenter la course des pistons du maître-cylindre.

La commande selon l'invention peut en outre comporter une ou plusieurs des caractéristiques suivantes, qui peuvent être combinées entre elles.

Avantageusement la pédale de frein étant au repos, l'angle α est d'environ 110°.

Avantageusement, la tige de liaison oscille de part et d'autre de la position alignée sur l'axe du maître-cylindre.

Selon une disposition particulière, le bras pivotant fait partie d'un levier coudé, et comporte au niveau du coude un point d'articulation le reliant à la caisse du véhicule, ce point d'articulation étant situé vers l'arrière par rapport au point d'articulation de pédale.

Le levier coudé peut être relié à la pédale de frein par une biellette comprenant deux articulations à ses extrémités, cette biellette formant un segment équivalent au segment reliant le point d'articulation de pédale et celui du levier coudé, les deux segments restant décalés et parallèles entre eux.

L'invention a aussi pour objet un véhicule automobile disposant d'une commande de freinage comprenant une pédale de frein et un maître-cylindre, cette commande de freinage comportant de plus l'une quelconque des caractéristiques précédentes.

Avantageusement, le véhicule automobile comporte des freins à disques.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'un dispositif de freinage suivant l'art antérieur, montrant une pédale de frein, un maître-cylindre vu en coupe axiale et la tige de liaison les reliant ;
- la figure 2 est un schéma d'un dispositif de freinage suivant l'invention, montrant la pédale de frein, le maître-cylindre vu en coupe axiale et la tige de liaison les reliant ;
- la figure 3 est un graphique montrant en fonction du débattement de la pédale de frein et pour plusieurs géométries de cette pédale, le rapport d'assistance de la pédale ; et
- la figure 4 est un schéma d'un dispositif de freinage suivant l'invention, selon une variante.

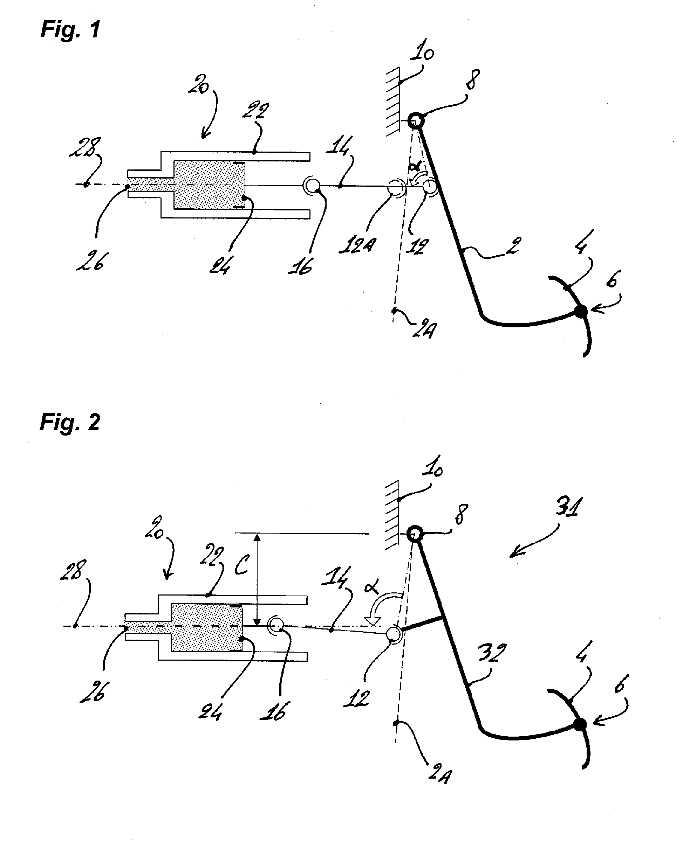

La figure 1 représente un système de freinage comportant une pédale de frein 2 agissant par une tige de commande 14 sur un maître-cylindre 20.

La pédale de frein 2 comporte un patin 4 recevant la pression exercée par le conducteur, qui pour le calcul sera considérée comme étant appliquée en un point central 6. La pédale de frein 2 pivote autour d'un point d'articulation de pédale 8 relié à la caisse du véhicule 10, et exerce un effort sur la tige de commande 14, en un point de commande 12 comportant aussi une articulation.

Le maître-cylindre 20 comporte un corps 22 comprenant une chambre cylindrique, recevant un piston 24 coulissant suivant l'axe 28 de cette chambre. La partie avant de la chambre comporte un orifice 26 relié par des canalisations, aux freins de roue pour leur transmettre la pression hydraulique de cette chambre.

Le piston 24 fermant la chambre vers l'arrière, est relié par un pivot 16 à la tige de commande 14. Cette tige de commande 14 a globalement un mouvement d'avance lors d'un freinage pour pousser le piston 24, qui s'accompagne d'un mouvement d'oscillation pour suivre la trajectoire en arc de cercle imposée par le point de commande 12 lié à la pédale de frein 2.

En fin de course la pédale de frein 2 et son point de commande 12, viennent dans des positions de fin de course respectivement 2A et 12A.

On dispose la géométrie de la pédale de frein 2 de manière à ce que l'angle α formé par la droite passant par les points d'articulation de pédale 8 et de commande 12, et l'axe 28 du maître-cylindre 20, oscille autour de 90° lors du débattement de cette pédale. Il faut donc un angle α inférieur à 90° au repos, qui est par exemple de 74° pour un débattement total de la pédale de 32°, ce qui donnera en fin de course un angle α de 106°.

Le rapport d'assistance pédale, qui est généralement proche de 3,5, dépend principalement en première approximation, du sinus de l'angle α. Les variations du sinus de l'angle α, et donc de ce rapport d'assistance pédale avec une telle géométrie, pour un angle α oscillant autour de 90°, sont minimes.

La figure 2 présente une commande de freinage 31, comprenant une pédale de frein 32 dont le point de commande 12, est nettement éloigné vers l'avant par rapport au corps de cette pédale. De cette manière, l'angle α formé par la droite passant par les points d'articulation de pédale 8 et de commande 12, et l'axe 28 du maître-cylindre 20, est pour une pédale au repos supérieur à 100°.

Au cours du débattement de la pédale de frein 32, l'angle α va augmenter de manière continue, et le rapport d'assistance va varier en première approximation suivant le sinus de cet angle, avec une croissance de plus en plus rapide.

On notera que la tige de liaison 14 oscille lors de son mouvement de part et d'autre de l'axe 28 du maître-cylindre 20, de manière à rester sensiblement alignée sur cet axe et à minimiser les efforts transversaux exercés par cette tige sur le piston 24, pour réduire les frottements de ce piston dans le corps 22.

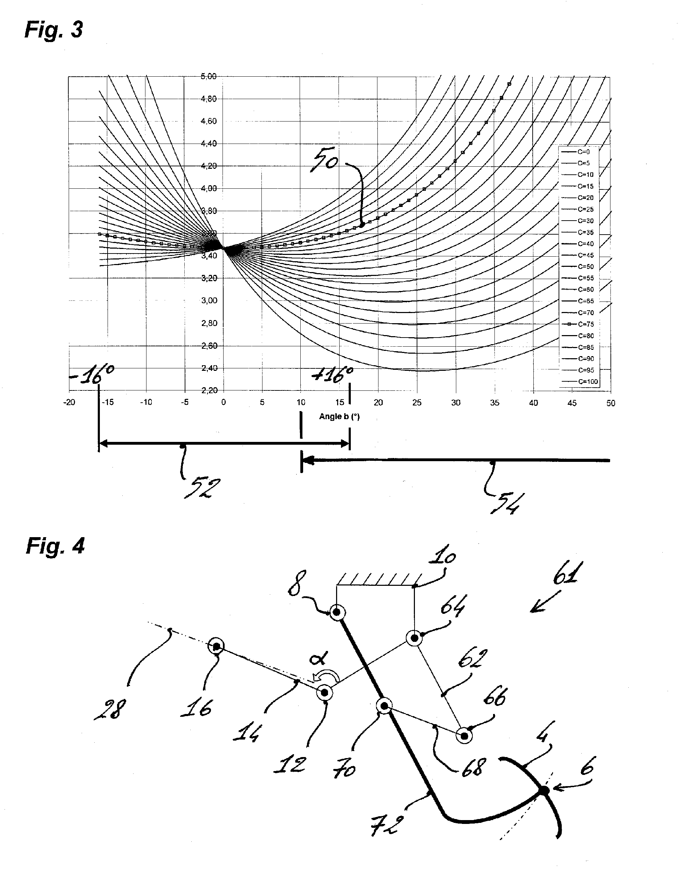

Le tableau de la figure 3 montre en fonction de l'angle b de débattement de la pédale de frein 2 exprimé en degré, et pour différents montages caractérisés par une cote C en mm présentée figure 2, représentant la distance entre le point d'articulation pédale 8 et l'axe 28 du maître-cylindre 20, un calcul de l'évolution du rapport d'assistance.

L'angle b égal à 0° correspond à un angle α de 90°, et la valeur d'assistance est de 3,42 quelque soit la valeur de la cote C.

Pour une cote C de 75 mm et une plage d'utilisation 52 de la pédale de +/- 16° autour du point 0, valeurs habituellement retenues pour une commande de frein suivant l'art antérieur, on obtient une courbe 50 très plate. Le rapport d'assistance de la pédale de frein 32 passe par un minimum de 3,42 pour 0°, puis monte très peu pour atteindre 3,50 en fin de course, des deux côtés.

Pour la commande de frein suivant l'invention, on garde une cote C de 75 mm, mais en prenant une plage d'utilisation 54 comportant un angle b supérieur à 10°, correspondant environ à un angle α supérieur à 100°. On constate que le rapport de démultiplication qui a une valeur minimum de 3,50, peut atteindre en fin de course de la pédale une valeur élevée supérieure à 4,00. La variation de ce rapport d'assistance est importante.

En augmentant par exemple le diamètre du piston 24 du maître-cylindre 20, pour obtenir une pression de freinage en fin de course de pédale, équivalente à ce que l'on obtient avec une commande conventionnelle, et garder une même puissance de freinage, on constate que l'on peut bénéficier en début de course du déplacement d'un volume de liquide de freinage plus important.

On peut ainsi facilement, avec une commande de frein d'un coût sensiblement équivalent, et une sensation pédale peu modifiée, prévoir des plaquettes de freins à disque qui reculent plus pour éliminer des frottements parasites et réduire les usures, ce qui permet des économies d'énergie.

Des calculs montrent notamment qu'en particulier avec un angle α d'environ 110° la pédale de frein 32 étant au repos, et en gardant une cote C équivalente, on peut sur un véhicule disposant de quatre freins à disque et d'un piston par frein, augmenter la course de recul de chaque piston d'environ 0,2 mm.

On notera que l'angle α ne doit pas être trop important en fin de course pédale, pour éviter d'approcher le point de rebroussement où la tige de liaison 14 se trouve alignée avec le point d'articulation pédale 8.

Par ailleurs la modification de l'angle α comme proposée par l'invention, peut entraîner un encombrement plus important de la commande de freinage 31 suivant l'axe longitudinal du véhicule. En effet, cet angle α étant plus ouvert, la distance entre la pédale de frein 32 et le maître-cylindre 20 peut être augmentée.

Compte-tenu de la position de la pédale de frein 32 par rapport au tablier séparant le compartiment moteur de l'habitacle du véhicule, sur les véhicules actuels, il n'est pas toujours possible d'implanter la commande de freinage 31.

Pour résoudre ce problème, la figure 4 présente une commande de freinage 61 comprenant une pédale de frein 72 similaire à la précédente, reliée à la caisse du véhicule 10 par le point d'articulation pédale 8.

Une biellette 68 est reliée à ses extrémités, par une première articulation de biellette 70 à la pédale de frein 72, et par une deuxième articulation de biellette 66 à un levier coudé 62. Le levier coudé 62 est relié au niveau de son coude, par un point d'articulation de levier 64, à la caisse du véhicule 10.

L'ensemble est disposé de manière à ce que la biellette 68 avec ses articulations 70, 66, forme un segment équivalent à celui reliant le point d'articulation de pédale 8 et celui 64 de levier coudé 62, les deux segments restant décalés et parallèles entre eux. On obtient ainsi avec ces quatre articulations un parallélogramme déformable, le levier coudé 62 entre ses deux articulations 64, 66, constituant un segment qui reproduit fidèlement le mouvement de la pédale de frein 72 lors de son débattement.

Le levier coudé 62 comporte à l'autre extrémité de son coude, le point de commande 12 relié à la tige de liaison 14. Le levier coudé 62 a le même rôle que la pédale de frein 72, avec des mouvements équivalents, mais il est reculé vers l'arrière par rapport à cette pédale.

On obtient pour cette commande de freinage 61 selon l'invention, les avantages déjà présentés concernant la variation du rapport d'assistance.

De plus, la commande de freinage 61 permet de reculer vers l'arrière le point de commande 12 pour réaliser plus facilement un angle α important, sans déplacer la pédale de frein 72 vers l'habitacle.

## Revendications

1. - Commande de freinage comprenant une pédale de frein (72) pivotante autour d'un point d'articulation (8) de pédale, et un maître-cylindre de freinage (20) comportant un piston (24) coulissant suivant un axe (28), actionné par une tige de liaison (14) reliée d'un côté par un pivot (16) à l'axe du piston, et de l'autre côté en un point de commande (12) d'un levier coudé (62) comportant, au niveau du coude, un point d'articulation (64) le reliant à la caisse du véhicule (10), ce point d'articulation étant situé vers l'arrière par rapport au point d'articulation (8) de pédale, le levier coudé (62) étant relié à la pédale de frein (72) par une biellette (68) comprenant deux articulations (70, 66) à ses extrémités, cette biellette formant un segment équivalent au segment reliant le point d'articulation (8) de pédale et celui (64) du levier coudé (62), les deux segments restant décalés et parallèles entre eux ; le levier coudé (62) reproduisant le débattement de la pédale avec un mouvement angulaire similaire.

2. . Commande de freinage selon la revendication 1, **caractérisée en ce que** la pédale de frein (72) étant au repos, l'angle α formé par la droite passant par les points d'articulation (64) et de commande (12), et l'axe (28) du maître-cylindre (20), est supérieur à 100°.

3. - Commande de freinage selon la revendication 1, **caractérisé en ce que** la pédale de frein (72) étant au repos, l'angle α est d'environ 110°.

4. - Commande de freinage selon l'une des revendications 1 à 3, **caractérisé en ce que** la tige de liaison (14) oscille de part et d'autre de la position alignée sur l'axe (28) du maître-cylindre (20).

5. - Véhicule automobile comportant une commande de freinage (61) comprenant une pédale de frein (72) et un maître-cylindre de freinage (20), **caractérisé en ce que** cette commande de freinage est réalisée selon l'une quelconque des revendications précédentes.

6. - Véhicule automobile selon la revendication 5, **caractérisé en ce qu'**il comporte des freins à disques.
